# EUROPÄISCHE PATENTSCHRIFT

(11) **EP 3 470 198 B1**
(45) Veröffentlichungstag und Bekanntmachung des Hinweises auf die Patenterteilung: **29.11.2023**
(21) Anmeldenummer: 17195985.1
(22) Anmeldetag: 11.10.2017
(51) Int. Cl.: B29C 31/00, B29C 31/08, B66C 1/10, B66C 1/16, B29C 70/54, B29C 70/30, B29L 31/08

(54) **VERFAHREN ZUM HERSTELLEN EINES ROTORBLATTGURTES FÜR EIN ROTORBLATT EINER WINDENERGIEANLAGE SOWIE SYSTEM ZUM HERSTELLEN EINES ROTORBLATTGURTS**
METHOD FOR PRODUCING A ROTOR BLADE SPAR CAP FOR A ROTOR BLADE OF A WIND TURBINE AND SYSTEM FOR PRODUCING A ROTOR BLADE SPAR CAP
PROCÉDÉ DE FABRICATION D'UN LONGERON DE PALE DE ROTOR POUR UNE PALE DE ROTOR D'UNE ÉOLIENNE ET SYSTÈME DE FABRICATION D'UN LONGERON DE PALE DE ROTOR

(43) Veröffentlichungstag der Anmeldung: 17.04.2019
(73) Patentinhaber: Nordex Energy SE & Co. KG, 22419 Hamburg (DE)
(72) Erfinder: Khan, Jehanzeb, 18057 Rostock (DE)
(74) Vertreter: Epping - Hermann - Fischer

(56) Entgegenhaltungen:
- WO-A1-2015/067280
- US-A- 2 472 843

## Beschreibung

Die Erfindung betrifft ein Verfahren zum Herstellen eines Rotorblattgurtes für ein Rotorblatt einer Windenergieanlage in einer Form. Darüber hinaus betrifft die Erfindung ein System zum Herstellen eines solchen Rotorblattgurtes.

Rotorblätter von Windenergieanlagen weisen typischerweise eine äußere Hülle oder Schale auf, die aus einem oder mehreren Verbundwerkstoffen oder Verbundlaminaten hergestellt ist. Derartige Materialien ermöglichen es trotz einer Leichtbauweise, den Rotorblättern strukturelle, mechanische Eigenschaften zu verleihen.

Um etwa eine Steifigkeit, eine Stärke, einen Knickwiderstand und/oder eine Länge der Rotorblätter zu erhöhen, werden typischerweise Strukturelemente gefertigt, die die Rotorblätter über einen Großteil der Rotorblattlänge von der Rotorblattwurzel bis zur Rotorblattspitze durchziehen. Anders ausgedrückt, folgen solche Strukturelemente beispielsweise einer Kontur eines Rotorblatts oder einer Rotorblatthalbschale in Längsrichtung. Bei solchen Strukturelementen handelt es sich beispielsweise um sogenannte Rotorblattgurte. Diese Rotorblattgurte bestehen typischerweise aus unidirektional ausgerichteten Fasersträngen, etwa Glas- oder Kohlenstofffasern, die in einem Matrixwerkstoff, etwa Harz, eingebettet sind. Die Strukturelemente sind typischerweise schichtartig aufgebaut, wobei entweder trockene Fasergelege mit dem Matrixwerkstoff versehen werden oder bereits vorgefertigte Lagen von in den Matrixwerkstoff eingebetteten Fasern (als sogenannte Prepregs bezeichnet) übereinander angeordnet und anschließend verbunden werden. Eine weitere Möglichkeit zur Fertigung der Strukturelemente ist die Verwendung sogenannter vorgefertigter Planken aus Faserverbundwerkstoff. Diese Planken sind vor der Weiterverarbeitung bereits ausgehärtet und können beispielsweise als Halbzeuge in einem Pultrusionsverfahren hergestellt werden.

Zur Herstellung von Strukturelementen und Rotorblättern werden beispielsweise mehrere Planken als Stapel in eine Form eingelegt, wobei sich ein oder mehrere weitere Verfahrensschritte anschließen, etwa eine sogenannte Harzinfusion. Die Herstellung von Rotorblattgurten beziehungsweise ganzen Rotorblättern ist beispielsweise in der WO 2015/067280 A1 oder der WO 2015/067281 A1 beschrieben.

WO 2015/067280 A1 offenbart ein Verfahren zur Herstellung eines Windturbinenblattes in einer Blattform, wobei das Windturbinenblatt eine Vielzahl von länglichen Verstärkungsstrukturen umfasst, die jeweils einen Stapel von Streifen aus faserverstärktem Polymermaterial umfassen. Das Verfahren umfasst:
- das Stapeln von Streifen aus faserverstärktem Polymermaterial, um eine Vielzahl von Stapeln zu bilden, von denen jeder eine Längsachse definiert;
- Ausrichten der Stapel relativ zueinander in einer Ausrichtzone außerhalb der Schaufelform;
- Stützen der Stapel, um ihre relative Ausrichtung beizubehalten; gleichzeitiges Überführen der mehreren Stapel in die Schaufelform unter Beibehaltung der relativen Ausrichtung der Stapel, wenn die Stapel überführt werden; und
- Integrieren der Stapel mit anderen Blattmaterialien zur Bildung des Blattes in der Blattform. 1

US 2 472 843 A offenbart einen Schlingenwagen, der einen starren Rahmen mit einem offenen Boden, mehrere leicht abnehmbare Gegenstandshaltemittel, die an zwei Enden des Rahmens in Abständen nach oben entlang des starren Rahmens angeordnet sind, und Gegenstandsrückhaltemittel an den Gegenstandshaltemitteln umfasst.

Eine Aufgabe, die der Erfindung zugrunde liegt, ist es, ein Konzept für die Herstellung von Rotorblattgurten und Rotorblättern anzugeben, welches zu einer effizienten Herstellung beiträgt.

Gemäß einem ersten Aspekt wird ein Verfahren zum Herstellen eines Rotorblattgurtes für ein Rotorblatt einer Windenergieanlage in einer Form offenbart. Das Verfahren weist die folgenden Schritte auf:
- Bereitstellen eines Stapels von zueinander vorgegeben ausgerichteten Planken aus Faserverbundwerkstoff, wobei der Stapel eine Längsachse sowie eine Unterseite, eine Oberseite und einander gegenüberliegende Lateralseiten aufweist,
- Bereitstellen einer Hebetraverse, mit welcher mehrere Halteklammern zum Halten des Stapels verbindbar sind, wobei die Halteklammern im Wesentlichen U-förmig ausgebildet sind und jeweils zwei Schenkel und eine die beiden Schenkel verbindende Deckelplatte aufweisen,
- Anbringen der Halteklammern an den Stapel entlang der Längsachse verteilt derart, dass der Stapel von der Oberseite und den zwei Lateralseiten formschlüssig mittels der Schenkel und der Deckelplatte umgeben und die vorgegebene Ausrichtung der Planken beibehalten ist,

- Anbringen einer Fixiervorrichtung an jeder Halteklammer derart, dass der Stapel zumindest von der Unterseite in der Halteklammer gehalten und zusammen mit der Halteklammer die vorgegebene Ausrichtung der Planken beibehalten ist,
- Transportieren des Stapels zur Form und Einlegen des Stapels in die Form mittels der Hebetraverse, wobei die Fixiervorrichtungen und Halteklammern von dem Stapel derart abgenommen werden, dass der Stapel mit der vorgegebenen Ausrichtung der Planken in der Form vorgegeben positioniert ist.

Das beschriebene Verfahren ermöglicht einen effizienten Transport des Stapels von Planken zur Form und eine effiziente Positionierung. Hierzu ist vorgesehen, den Stapel, bei dem die Planken bereits zueinander vorgegeben ausgerichtet sind, mittels der Hebetraverse und daran befestigten Halteklammern und daran angebrachten Fixiervorrichtungen zur Form zu transportieren und einzulegen, wobei nach Abnahme der Fixiervorrichtungen und Halteklammern der Stapel an einer vorgegebenen Position innerhalb der Form angeordnet ist, ohne dass die ursprüngliche Ausrichtung der Planken zueinander entscheidend verändert ist. Hierzu sind die Halteklammern vorgesehen, die den Stapel an drei Seiten umgeben. Die Halteklammern umgreifen den Stapel dabei von oben, nämlich der Oberseite, und den Lateralseiten und sind nach unten hin, etwa in Richtung der Form beim Einlegen, geöffnet. Zumindest um die Unterseite herum wird eine Fixiervorrichtung für jede Halteklammer so angebracht, dass der Stapel in der Halteklammer unter Beibehaltung der vorgegebenen Ausrichtung der Planken gehalten ist.

Mit Vorteil ist es nicht notwendig, die einzelnen Planken erst mühsam in der Form zu stapeln und auszurichten, sondern die Planken können bereits vorab, etwa auf einem Lagergestell, in vorgegebener Ausrichtung zueinander ausgerichtet und in dieser Ausrichtung unverändert in die Form eingebracht werden. Gerade das Ausrichten und Stapeln der Planken außerhalb der Form bietet regelmäßig mehr Platz und ermöglicht eine vergleichsweise einfachere Handhabung. Die Ausgestaltung der Halteklammern in Kombination mit den jeweiligen Fixiervorrichtungen ermöglicht somit ein einfaches Fixieren und Transportieren des Stapels mittels der Hebetraverse, die einfach und effizient abnehmbar sind, wenn der Stapel in der Form eingelegt ist oder gerade eingelegt wird. Weitere Vorteile liegen in einer damit einhergehenden Zeitersparung und Einhaltung von Zykluszeiten bei der Herstellung der Rotorblatthalbschalen.

Die Bereitstellung des Stapels erfolgt beispielsweise mit Hilfe von Lagergestellen. Auf einem oder mehreren dieser Lagergestelle ist der Stapel beispielsweise flach gelagert und positioniert. Zusätzlich oder alternativ ist das Lagergestell so ausgebildet, dass die vorgegebene Ausrichtung der Planken des Stapels zueinander vorgegeben ist. Dadurch können die Planken direkt nach deren Herstellung in dem Lagergestell angeordnet und von dort in idealer Ausrichtung weiterverwendet werden.

Nach dem Einbringen in die Form schließen sich weitere Verfahrensschritte an, sodass die Planken fest, etwa stoffschlüssig, verbunden werden.

Bei dem Stapel handelt es sich um eine oder mehrere Lagen von Planken. Beispielsweise handelt es sich um sechs Lagen mit jeweils sechs nebeneinander angeordneten Planken. Eine Lage kann alternativ auch nur aus einer Planke bestehen. Die Planken eines Stapels können unterschiedlich ausgebildet sein, beispielsweise haben die einzelnen Planken unterschiedliche Breiten, Längen, Dicken, Schäftungen oder dergleichen.

Bei der Hebetraverse handelt es sich um einen mechanischen Träger, der zur Stabilisierung, Befestigung oder Verbindung dient und hohe Kräfte aufnehmen kann.

Die U-förmigen Halteklammern sind beispielsweise flexibel an der Hebetraverse, etwa mittels Seilen oder Ketten gleicher oder zumindest teilweise unterschiedlicher Länge an der Traverse, angebunden. Über die unterschiedlich lange Anbindung der Halteklammern an die Traverse ist beispielsweise eine Kontur oder Formgebung des Stapels bezogen auf die Längsachse des Stapels einstellbar. Die Halteklammern sind vor dem Anbringen an den Stapel bereits mit der Hebetraverse verbunden oder werden nach dem Anbringen an den Stapel mit der Hebetraverse verbunden.

Bei den Planken handelt es sich um längliche, stab- und/oder plattenförmige Pultrusionsplanken von typischerweise großer Länge, beispielsweise 50 m bis 80 m. Eine Planke weist ein faserverstärktes Material auf, beispielsweise Glasfasern oder Kohlenstofffasern, die in eine Polymermatrix eingebettet sind. Die Planken werden auch als Verstärkungselement oder Verstärkungsstrukturelement bezeichnet.

Die Form weist eine entsprechende, gewünschte Formgebung auf, die die äußere Kontur eines Rotorblattgurtes definiert.

Das Verfahren eignet sich auch für die Herstellung eines Rotorblattes, welches einen oder mehrere Rotorblattgurte aufweist. Entsprechend ist die Form für die Ausbildung eines ganzen Rotorblattes ausgebildet. In diese Form werden folglich ein oder mehrere Stapel von vorgegeben ausgerichteten Planken sowie ein oder mehrere weitere Komponenten und/oder Materialien eingebracht. Anschließend werden sämtlichen Komponenten in der Form fest miteinander verbunden.

Gemäß einer Ausführungsform wird der Stapel von einem bezogen auf die Längsachse längsseitigen Ende beginnend in die Form eingelegt und die Fixiervorrichtungen während des Einlegens des Stapels in die Form sequentiell ausgehend von dem längsseitigen Ende abgenommen. Der Stapel wird folglich beginnend auf einer Längsseite in die Form, etwa schräg, eingesetzt und anschließend der Länge nach zum gegenüberliegenden längsseitigen Ende in die Form eingelassen und abgelegt. Mit anderen Worten bildet das eine längsseitige Ende einen ersten, initialen Auflagepunkt oder Auflagebereich, ausgehend von dem der Stapel in die Form abgerollt wird. Wieder anders ausgerückt, wandert eine Kontaktgrenze des Stapels, die einen bereits in die Form eingelegten Bereich des Stapels von dem noch nicht eingelegten Bereich des Stapel bezüglich der Längsachse trennt, entlang der Längsachse in Richtung des dem längsseitigen Ende gegenüberliegenden zweite Längsende. Die Fixiervorrichtungen und Halteklammern werden jeweils kurz bevor der Stapel in einem jeweiligen Bereich einer Halteklammer mit daran angeordneter Fixiervorrichtung in Kontakt mit der Form tritt, gelöst beziehungsweise entlastet und abgenommen. Die Fixiervorrichtungen und Halteklammern werden jeweils erst dann gelöst, wenn eine minimale Höhe zwischen Stapel und Form erreicht ist. Dies hat den Vorteil, dass die vorgegebene Ausrichtung der Planken des Stapels kurz vor dem Einlegen durch die jeweilige Fixiervorrichtung und Halteklammer in der Form gehalten ist. Unter dem Begriff "sequentiell" wird verstanden, dass die Fixiervorrichtungen und Halteklammern nacheinander, etwa der Reihe nach, abgenommen werden.

Gemäß einer Ausführungsform werden die Fixiervorrichtungen erst nach einem vollständigen Einlegen des Stapels in die Form von dem Stapel abgenommen. Beispielsweise werden die Fixiervorrichtungen und Halteklammern erst nach dem Ablegen vorsichtig aus der Form abgezogen.

Gemäß einer Ausführungsform weist der Stapel an der Unterseite entlang der Längsachse mehrere, quer zur Längsachse verlaufende, zu den Fixiervorrichtungen korrespondierende Ausnehmungen auf. Bei den Ausnehmungen handelt es sich beispielsweise um Schlitze, Nuten oder Kerben die in die unterste Lage Planken eingebracht sind. In den Ausnehmungen sind die Fixiervorrichtungen zumindest teilweise geführt. Dies ermöglicht zum einen, dass die Fixiervorrichtungen sicher an dem Stapel befestigt sind. Zum anderen ermöglichen die Ausnehmungen, dass nach einem vollständigen Einlegen des Stapels in die Form oder nach einem zumindest teilweise Einlegen des Stapels im Bereich einer entsprechenden Fixiervorrichtung mit Halteklammer in die Form, die Fixiervorrichtung aus oder von dem Stapel abgezogen werden kann, ohne dass beispielsweise in der Form ausgelegte Folien oder anderweitige Lagen durch das Abnehmen der Fixiervorrichtungen beschädigt oder verschoben werden. Dies liegt daran, dass durch die Ausnehmungen kein Gewicht des Plankenstapels auf den Fixiervorrichtungen lastet. Diese Ausführungsform ermöglicht mit Vorteil, dass der Stapel zunächst einfach und vollständig in der Form positioniert wird und nachträglich erst die Fixiervorrichtungen und Klammern abgenommen werden.

Gemäß einer Ausführungsform wird der Stapel beim Einlegen in die Form mit einem bezogen auf die Längsachse längsseitigen Ende gegen einen Anschlag zum Positionieren angesetzt. Bei dem Anschlag handelt es sich um eine Positioniervorrichtung, die beispielsweise als Anschlagsplatte ausgestaltet ist. Der Anschlag kann auch als Längsanschlag bezeichnet werden. Beispielsweise handelt es sich bei dem längsseitigen Ende um das Ende, von welchem ausgehend der Stapel in die Form eingelegt wird, wie oben beschrieben. Dieses Ende kann beispielsweise das rotorblattwurzelseitige Ende der Form sein. Dies trägt dazu bei, dass der Stapel besonders zielgerichtet in der Form positionierbar ist.

Gemäß einer Ausführungsform wird der Stapel beim Einlegen in die Form in Querrichtung zu der Längsachse zumindest gegen einen lateralen Anschlag angesetzt. Bei dem lateralen Anschlag handelt es sich analog zu oben um eine weitere oder die gleiche Positioniervorrichtung, wobei diese in Querrichtung zur Längsachse eine Position des Stapels vorgibt oder definiert. Es kann sich bei dem lateralen Anschlag jedoch auch um einen Teil eines weiteren Rotorblattgurtes oder eines Material eines herzustellenden Rotorblattes, etwa Kernmaterial, handeln, wie eingangs erwähnt. Auch der laterale Anschlag trägt zu einer effizienten, einfachen und sicheren Positionierung des Stapels in der Form bei.

Gemäß einer Ausführungsform weist eine dem Stapel zugewandte Innenfläche eines Schenkels, beider Schenkel und/oder der Deckelplatte eine zu der vorgegebenen Ausrichtung der Planken des Stapels korrespondierende Formgebung auf. Beispielsweise ist eine Innenfläche der genannten Komponenten vorgegeben gewölbt oder geschwungen.

Gemäß einer Ausführungsform weist jede Halteklammer an den Schenkeln, insbesondere Außenseiten dieser, Befestigungsmittel auf, wobei im Schritt des Anbringens der Fixiervorrichtungen jede Fixiervorrichtung mit den Befestigungsmitteln einer entsprechenden Halteklammer verbunden wird. Beispielsweise handelt es sich bei den Befestigungsmitteln um Haken oder Ösen, die mit den Fixiervorrichtungen verbunden werden. Dadurch kann ein einfacherer und sicherer Transport der Stapel gewährleistet werden.

Gemäß einer Ausführungsform sind die Fixiervorrichtungen als Hebegurte oder Ratschengurte ausgebildet. Insbesondere Hebegurte oder Ratschengurte ermöglichen eine einfache und effiziente Handhabbarkeit beim Transportieren des Stapels. Unter einem Ratschengurt wird ein Hebe- oder Spanngurt verstanden, der mit Hilfe einer Ratsche festgezurrt oder festgespannt werden kann. Die Fixiervorrichtungen sind optional als Spannvorrichtungen ausgebildet.

Gemäß einer weiteren Ausführungsform sind die Fixiervorrichtungen als Bügel ausgebildet. Die Bügel werden in Aussparungen in den Schenkeln der Halteklammern geschoben und gegen ein Verrutschen gesichert. Die Bügel können eine Form aufweisen, die der Querwölbung des Rotorblattgurts an der jeweiligen Längsposition entspricht, wodurch die vorgegebene Form des Stapels beim Transportieren sicher erhalten bleibt.

Korrespondierend zu dem Verfahren wird ein System zum Herstellen eines Rotorblattgurts eines Rotorblattes einer Windenenergieanlage in einer Form offenbart. Das System weist eine Form zum Einlegen eines Stapels von vorgefertigten, zueinander vorgegeben ausgerichteten Planken aus Faserverbundwerkstoff auf. Der Stapel weist eine Längsachse auf. Der Stapel weist eine Unterseite, eine Oberseite und einander gegenüberliegende Lateralseiten auf. Das System weist weiter eine Hebetraverse und mehrere mit der Hebetraverse verbindbare Halteklammern zum Halten des Stapels auf. Die Halteklammern sind U-förmig ausgebildet und weisen jeweils zwei Schenkel und eine die beiden Schenkel verbindende Deckelplatte zum formschlüssigen Umgeben des Stapels von der Oberseite und den zwei Lateralseiten auf. Das System weist weiter an jeder Halteklammer angeordnete Fixiervorrichtungen auf, sodass der Stapel zumindest von der Unterseite in der Halteklammer haltbar und zusammen mit der Halteklammer die vorgegebene Ausrichtung der Planken beibehaltbar sind. Die Fixiervorrichtungen sind als Hebegurte oder Ratschengurte ausgebildet. Das System ist ausgebildet, ein Verfahren gemäß einer der zuvor beschriebenen Ausführungsformen auszuführen.

Das System ermöglicht im Wesentlichen die vorgenannten Vorteile und Funktionen. Soweit zutreffend gelten die obigen Ausführungen und Ausführungsformen für das System analog.

Die Erfindung betrifft auch einen Rotorblattgurt und ein Rotorblatt mit einem Rotorblattgurt, welcher bzw. welches entsprechend dem zuvor beschriebenen Verfahren bzw. mittels der zuvor beschriebenen Vorrichtung hergestellt sind.

Weitere Vorteile und Funktionen sind in der nachfolgenden, ausführlichen Beschreibung eines Ausführungsbeispiels offenbart. Das Ausführungsbeispiel wird unter Zuhilfenahme der angehängten Figuren ohne Einschränkung der Allgemeinheit nachfolgend beschrieben. Gleichartige oder gleich wirkende Elemente sind figurenübergreifend mit den gleichen Bezugszeichen versehen.

In den Figuren zeigen:
- Figur 1: eine schematische Darstellung einer Windenergieanlage,
- Figur 2: ein System zur Herstellung eines Rotorblattgurtes,
- Figur 3: eine schematische Querschnittsansicht des Systems,
- Figur 4: ein Lagergestell zum Lagern eines Stapels von Planken zum Herstellen eines Rotorblattgurtes,
- Figur 5: eine Aufsicht auf das Lagergestell gemäß Figur 4,
- Figur 6: ein schematisches Ablaufdiagramm eines Verfahrens zum Herstellen eines Rotorblattgurtes und
- Figuren 7a und 7b: zwei Ausführungsformen der Fixiervorrichtung.

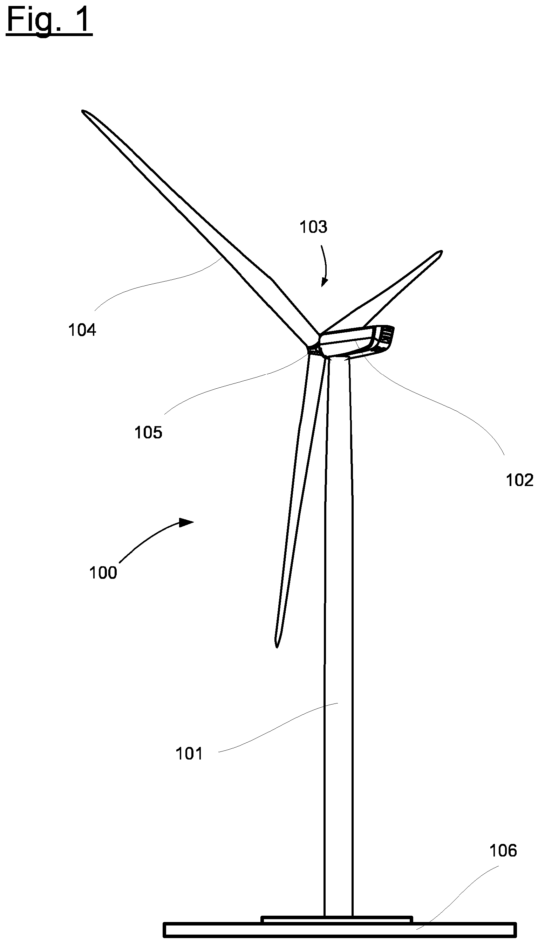

Figur 1 zeigt eine schematische Darstellung einer Windenergieanlage 100 gemäß einem Ausführungsbeispiel. Die Windenergieanlage 100 weist einen Turm 101 auf, der durch ein Fundament 106 auf einem Untergrund befestigt ist. Der Turm 101 ist beispielsweise ein Stahlrohrturm, Betonturm oder Fachwerkturm.

Am oberen Ende des Turms 101 ist eine Gondel 102 drehbar gelagert. Die Gondel 102 weist beispielsweise einen Generator auf, der über eine Rotorwelle (nicht dargestellt) mit einem Rotor 103 gekoppelt ist. Der Rotor 103 weist ein oder mehrere Rotorblätter 104 auf, die an einer Rotornabe 105 angeordnet sind. Der Rotor 103 wird im Betrieb durch eine Luftströmung in Rotation versetzt. Diese Rotationsbewegung wird über die Rotorwelle und gegebenenfalls ein Getriebe zu dem Generator übertragen, der die kinetische Energie des Rotors 103 in elektrische Energie umwandelt.

Wie eingangs erwähnt, weisen Rotorblätter ein oder mehrere Rotorblattgurte auf, die typischerweise aus mehreren vorgefertigten Planken aufgebaut sind. Im Folgenden wird die Herstellung eines Rotorblattgurtes gemäß dem Ausführungsbeispiel der Erfindung beschrieben.

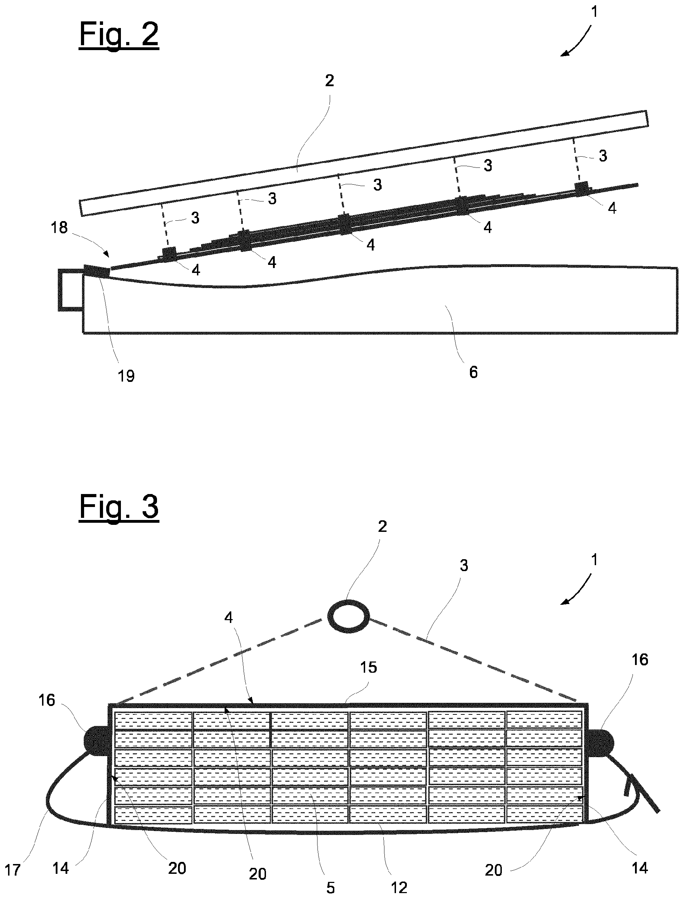

Figur 2 zeigt schematisch ein System 1 zur Herstellung eines Rotorblattgurtes. Das System 1 weist eine Hebetraverse 2 auf, an der über Ketten 3 mehrere Halteklammern 4 angebunden sind. Die Halteklammern 4 sind ausgebildet und eingerichtet, zusammen mit Fixiervorrichtungen einen Stapel 5, der mehrere über- und/oder nebeneinander angeordnete vorgefertigte Planken umfasst, zu tragen und transportieren. Mit Hilfe der Traverse 2 wird der Stapel 5 in eine Form 6, beispielsweise eine sogenannte Hauptgurtform, zum Herstellen eines Rotorblattgurtes vorgegeben positioniert eingelegt.

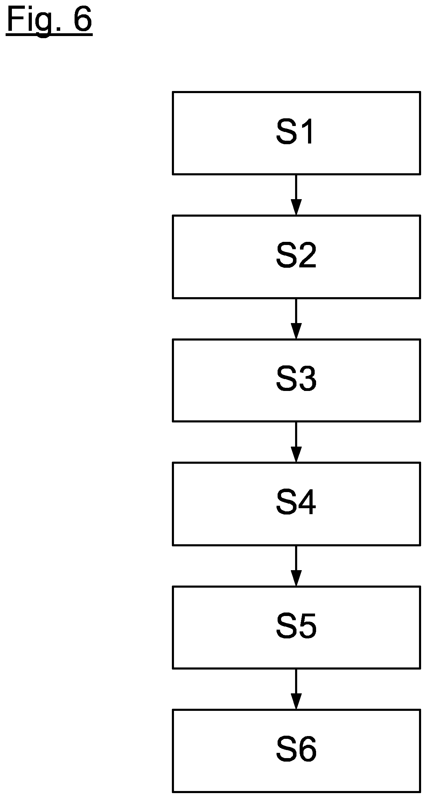

Die Herstellung des Rotorblattgurtes wird mit Hilfe des schematisch in Figur 6 dargestellten Ablaufdiagramms nachfolgend erläutert.

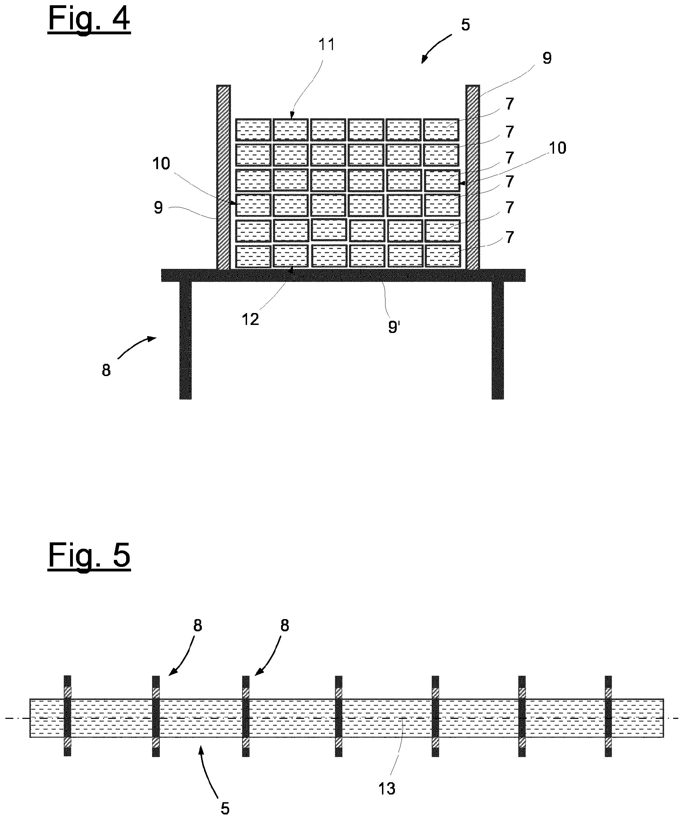

In einem ersten Schritt S1 wird der Stapel 5 bereitgestellt. Wie in Figur 4 dargestellt umfasst der Stapel 5 im Ausführungsbeispiel sechs übereinander angeordnete Lagen mit jeweils sechs Planken 7 aus Faserverbundwerkstoff. Im Ausführungsbeispiel ist der Stapel 5 mit einer vorgegebenen Ausrichtung der Planken 7 zueinander auf mehreren Lagergestellen 8 gelagert. Die Lagergestelle 8 weisen seitliche Begrenzungen 9 auf. Zusammen mit Bodenabschnitten 9` der Lagergestelle 8 ist der Stapel 5 an Lateralseiten 10 und einer Unterseite 12 des Stapels 5 formschlüssig umgriffen. Mit anderen Worten sind die Lagerstelle 8 mit den Bodenabschnitten 9' und den seitlichen Begrenzungen 9 an eine Formgebung des Stapels 5 angepasst. Der Stapel 5 weist weiterhin eine der Unterseite 12 gegenüberliegende Oberseite 11 auf. Die Lagergestelle 8 geben eine Kontur des Stapels 5 vor, die derjenigen Kontur entspricht, die der Stapel 5 im späteren, eingelegten Zustand in der Form 6 und im endgültigen Fertigungszustand einnehmen soll.

Figur 5 zeigt eine Draufsicht auf den in den Lagergestellen 8 gelagerten Stapel 5.

Die Planken 7 werden beispielsweise direkt nach deren Herstellung und Weiterverarbeitung, etwa dem Schäften und/oder Ablängen, in die Lagergestelle 8 gebracht. Die Lagergestelle 8 werden alternativ auch als ein Lagergestell 8 angesehen. Anstelle der mehreren Lagergestelle 8 kann auch ein einzelnes Lagergestell oder eine zusammenhängende Lagergestellvorrichtung aus mehreren Lagergestellen 8 vorgesehen sein.

In einem nächsten Schritt S2 wird die bereits erwähnte Hebetraverse 2 bereitgestellt, an der die Halteklammern 4 flexibel über die Ketten 3 angebunden sind.

In einem nächsten Schritt S3 werden die Halteklammern 4 an den Stapel 5 entlang einer Längsachse 13 des Stapels 5 derart beabstandet zueinander, verteilt angebracht, dass der Stapel 5 von der Oberseite 11 sowie den beiden Lateralseiten 10 formschlüssig umgeben ist. Dies ist in Figur 3 schematisch durch einen Querschnitt des Systems 1 gezeigt. Der Stapel 5 ist in diesem Zustand noch auf den Lagergestellen 8 gelagert. Dabei ist die vorgegebene Ausrichtung der Planken 7 des Stapels 5 beibehalten. Innenflächen 20 der Schenkel 14 und der Deckelplatte 15 sind an die Ausrichtung der Planken 7 und damit die Kontur des Stapels 5 angepasst.

Jede Halteklammer 4 weist zwei nicht notwendigerweise gleichlange Schenkel 14 auf, die über eine Deckelplatte 15 miteinander verbunden sind. An jedem Schenkel 14 ist ein Befestigungsmittel 16, etwa ein Haken, angebracht, an welche eine Fixiervorrichtung 17, bei der es sich im Ausführungsbeispiel um einen Ratschengurt handelt, angebracht werden kann.

Im nächsten Schritt S4 werden die Fixiervorrichtungen 17 so an die Halteklammern 4 befestigt, dass der Stapel 5 von der Unterseite 12 in der Halteklammer 4 sicher gehalten ist. Dabei wird die vorgegebene Ausrichtung der Planken 7 des Stapels 5 beibehalten.

An dieser Stelle sei erwähnt, dass die Kettenlängen der Ketten 3 optional so gewählt sind, dass der Stapel 5 bezogen auf die Längsachse 13 eine vorgegebene Kontur hat.

In einem nächsten Schritt S5 wird der Stapel 5 mit Hilfe der Hebetraverse 2 zur Form 6 transportiert und in die Form 6 eingelegt. Dabei wird der Stapel 5 wie in Figur 2 gezeigt schräg mit einem längsseitigen Ende 18 gegen einen längsseitigen Anschlag 19 angesetzt und beginnend von dem längsseitigen Ende 18 entlang der Längsachse 13 in die Form 6 abgelegt, etwa abgerollt. Alternativ kann der Stapel zuerst auf dem höchsten Punkt der Form z.B. in der Mitte abgelegt und mit einer Positioniervorrichtung festgeklemmt werden um das eventuelle Verrutschen des Stapels in Längs- und Querrichtung zu verhindern. Danach kann der Stapel blattwurzelseitig und blattspitzenseitig abgelegt werden. Dabei werden die jeweiligen Halteklammern 4 und Fixiervorrichtungen 17 sequentiell, das heißt kurz vor dem Kontakt eines Abschnitts Stapels 5 mit der Hauptgurtform 6 beim Ablegen, von dem Stapel 5 aus minimaler Höhe abgenommen. Bei dem längsseitigen Ende 18 handelt es sich beispielsweise um ein wurzelseitiges Ende. Der längsseitige Anschlag 19 ist als Anschlagsplatte ausgebildet. Optional sind ein oder mehrere laterale Positioniervorrichtungen bzw. Anschläge vorgesehen, um den Stapel 5 in Querrichtung zu der Längsachse 13 zielführend zu positionieren.

In einem weiteren Schritt S6 erfolgt optional eine weitere Bearbeitung des in der Form 6 abgelegten Stapels 5 der Planken 7, beispielsweise das Einbringen von Harzmaterial zum Aushärten des Stapels 5. Auch können weitere Stapel von Planken und/oder Kernmaterial und/oder Laminatlagen zur vollständigen Formgebung und Herstellung eines gesamten Rotorblattes in die Form eingebracht werden.

Das System 1 und das beschriebene Verfahren ermöglichen die eingangs genannten Vorteile und Funktionen. Insbesondere können die Planken 7 in vorgegebener Ausrichtung als Stapel 5 direkt in die Form eingebracht werden, wobei diese nicht mehr zueinander ausgerichtet werden müssen.

In einem nicht gezeigten Ausführungsbeispiel ist der Stapel 5 an der Unterseite 12 mit sich quer zur Längsrichtung ertsreckenden Ausnehmungen versehen, in denen jeweils eine Fixiervorrichtung 17 angeordnet ist. Dadurch ergeben sich die eingangs genannten Vorteile.

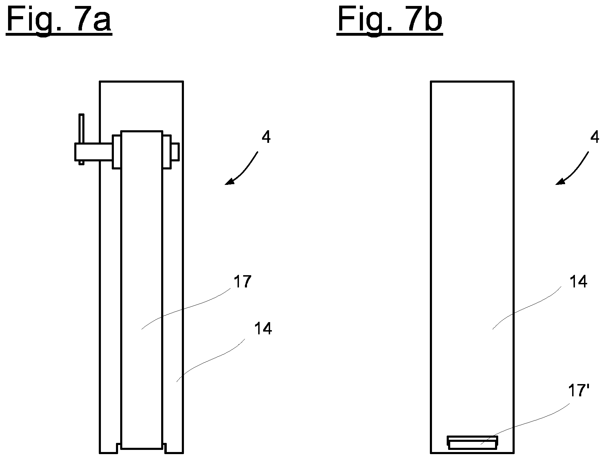

Die Figuren 7a und 7b zeigen zwei Ausgestaltungen der Fixiervorrichtungen 17, 17' mit Blick auf einen Schenkel 14 der Halteklammer 4. Dabei entspricht die Darstellung der Fig. 7a der Ausgestaltung aus Fig. 3 in einer Seitenansicht. Figur 7b zeigt eine weitere Ausgestaltung der Fixiervorrichtung 17' in Form eines Bügels, welcher unter dem Stapel 5 durchgeschoben und in Aussparungen in den Schenkeln der Halteklammern gegen ein Verrutschen gesichert wird.

### Bezugszeichenliste

- 1: System
- 2: Hebetraverse
- 3: Kette
- 4: Halteklammer
- 5: Stapel
- 6: Form
- 7: Planke
- 8: Lagergestell
- 9: seitliche Begrenzung
- 9': Bodenabschnitt
- 10: Lateralseite
- 11: Oberseite
- 12: Unterseite
- 13: Längsachse
- 14: Schenkel
- 15: Deckelplatte
- 16: Befestigungsmittel
- 17: Fixiervorrichtung
- 18: längsseitiges Ende
- 19: Anschlag
- 100: Windenergieanlage
- 101: Standvorrichtung
- 102: Gondel
- 103: Rotor
- 104: Rotorblatt
- 105: Rotornabe
- 106: Fundament
- S1 bis S6: Schritte

## Patentansprüche

1. Verfahren zum Herstellen eines Rotorblattgurtes für ein Rotorblatt einer Windenergieanlage in einer Form (6), aufweisend die Schritte:
- Bereitstellen eines Stapels (5) von zueinander vorgegeben ausgerichteten Planken (7) aus Faserverbundwerkstoff, wobei der Stapel (5) eine Längsachse (13) sowie eine Unterseite (12), eine Oberseite (11) und einander gegenüberliegende Lateralseiten (10) aufweist,
- Bereitstellen einer Hebetraverse (2), mit welcher mehrere Halteklammern (4) zum Halten des Stapels (5) verbindbar sind, wobei die Halteklammern (4) im Wesentlichen U-förmig ausgebildet sind und jeweils zwei Schenkel (14) und eine die beiden Schenkel (14) verbindende Deckelplatte (15) aufweisen,
- Anbringen der Halteklammern (4) an den Stapel (5) entlang der Längsachse (13) verteilt derart, dass der Stapel (5) von der Oberseite (11) und den zwei Lateralseiten (10) formschlüssig umgeben und die vorgegebene Ausrichtung der Planken (7) beibehalten ist,
- Anbringen einer Fixiervorrichtung (17, 17') an jede Halteklammer (4) derart, dass der Stapel (5) zumindest von der Unterseite (12) in der Halteklammer (4) gehalten und zusammen mit der Halteklammer (4) die vorgegebene Ausrichtung der Planken (7) beibehalten ist, und
- Transportieren des Stapels (5) zur Form (6) und Einlegen des Stapels (5) in die Form (6) mittels der Hebetraverse (2) wobei die Fixiervorrichtungen (17, 17') und Halteklammern (4) von dem Stapel (5) derart abgenommen werden, dass der Stapel (5) mit der vorgegebenen Ausrichtung der Planken (7) in der Form (6) vorgegeben positioniert ist.

2. Verfahren nach Anspruch 1,
wobei der Stapel (5) von einem bezogen auf die Längsachse (13) längsseitigen Ende (18) beginnend in die Form (6) eingelegt wird und wobei die Fixiervorrichtungen (17, 17') und Halteklammern (4) während des Einlegens des Stapels (5) sequentiell ausgehend von dem längsseitigen Ende (18) abgenommen werden.

3. Verfahren nach Anspruch 1 oder 2,
wobei die Fixiervorrichtungen (17) und/oder die Halteklammern (4) erst nach einem vollständigen Einlegen des Stapels (5) in die Form (6) von dem Stapel (5) abgenommen werden.

4. Verfahren nach einem der vorhergehenden Ansprüche,
wobei der Stapel (5) an der Unterseite (12) entlang der Längsachse (13) mehrere zu den Fixiervorrichtungen (17, 17') korrespondierende Ausnehmungen aufweist.

5. Verfahren nach einem der vorhergehenden Ansprüche,
wobei der Stapel (5) beim Einlegen in die Form (6) mit einem bezogen auf die Längsachse (13) längsseitigen Ende gegen einen Anschlag (19 zum Positionieren angesetzt wird.

6. Verfahren nach einem der vorhergehenden Ansprüche,
wobei der Stapel (5) beim Einlegen in die Form (6) in Querrichtung zu der Längsachse (13) zumindest gegen einen lateralen Anschlag (19) angesetzt wird.

7. Verfahren nach einem der vorhergehenden Ansprüche,
wobei eine dem Stapel (5) zugewandte Innenfläche eines Schenkels (14), beider Schenkel (14) und/oder der Deckelplatte (15) eine zu der vorgegebenen Ausrichtung der Planken (7) des Stapels (5) korrespondierende Formgebung aufweist.

8. Verfahren nach einem der vorhergehenden Ansprüche,
wobei jede Halteklammer (4) an den Schenkeln (14) Befestigungsmittel (16) aufweist, wobei im Schritt des Anbringens der Fixiervorrichtungen (17, 17') jede Fixiervorrichtung (17) mit den Befestigungsmitteln (16) einer entsprechenden Halteklammer (4) verbunden wird.

9. Verfahren nach einem der vorhergehenden Ansprüche,
wobei die Fixiervorrichtungen (17) als Hebegurte oder Ratschengurte ausgebildet sind.

10. Verfahren nach einem der Ansprüche 1 bis 8, wobei die Fixiervorrichtungen (17') als Bügel ausgebildet sind.

11. System (1) zum Herstellen eines Rotorblattgurts eines Rotorblattes einer Windenenergieanlage in einer Form (6), aufweisend
- eine Form (6) zum Einlegen eines Stapels (5) von vorgefertigten, zueinander vorgegeben ausgerichteten Planken (7) aus Faserverbundwerkstoff, wobei der Stapel (5) eine Längsachse (13) sowie eine Unterseite (12), eine Oberseite (11) und einander gegenüberliegende Lateralseiten (10) aufweist,
- eine Hebetraverse (2) und mehrere mit der Hebetraverse (2) verbindbare Halteklammern (4) zum Halten des Stapels (5), wobei die Halteklammern (4) U-förmig ausgebildet sind und jeweils zwei Schenkel (14) und eine die beiden Schenkel (14) verbindende Deckelplatte (15) zum formschlüssigen Umgeben des Stapels (5) von der Oberseite (11) und den zwei Lateralseiten (10) aufweisen, und
- an jeder Halteklammer (4) angeordnete Fixiervorrichtungen (17), so dass der Stapel (5) zumindest von der Unterseite (12) in der Halteklammer (4) haltbar und zusammen mit der Halteklammer (4) die vorgegebene Ausrichtung der Planken (7) beibehaltbar sind,
wobei
- die Fixiervorrichtungen (17) als Hebegurte oder Ratschengurte ausgebildet sind, und
- das System (1) ausgebildet ist, ein Verfahren nach einem der vorhergehen Ansprüche auszuführen.

## Claims

1. A method for producing a rotor blade spar cap for a rotor blade of a wind turbine in a mold (6), comprising the steps:
- providing a stack (5) made up of planks (7) of a fiber composite material which are aligned relative to one another in a predefined manner, the stack (5) having a longitudinal axis (13) as well as an underside (12), a top side (11) and mutually opposite lateral sides (10),
- providing a lifting crossbar (2) to which a plurality of holding clamps (4) for holding the stack (5) can be connected, the holding clamps (4) substantially being of U-shaped design and each having two legs (14) and a cover plate (15) connecting the two legs (14),
- attaching the holding clamps (4) to the stack (5) distributed along the longitudinal axis (13) in such a way that the stack (5) is positively surrounded by the top side (11) and the two lateral sides (10) and the predefined alignment of the planks (7) is maintained,
- attaching a fixing device (17, 17') to each holding clamp (4) in such a way that the stack (5) is held in the holding clamp (4) at least from the underside (12) and, together with the holding clamp (4), the predefined alignment of the planks (7) is maintained, and
- transporting the stack (5) to the mold (6) and inserting the stack (5) into the mold (6) by means of the lifting crossbar (2), the fixing devices (17, 17') and the holding clamps (4) being removed from the stack (5) in such a way that the stack (5) is positioned in the mold (6) in a predefined manner with the predefined alignment of the planks (7) .

2. The method according to claim 1,
wherein the stack (5) is inserted into the mold (6) starting from a longitudinal end (18) with respect to the longitudinal axis (13), and wherein the fixing devices (17, 17') and the holding clamps (4) are removed sequentially starting from the longitudinal end (18) during inserting the stack (5).

3. The method according to claim 1 or 2,
wherein the fixing devices (17) and/or the holding clamps (4) are removed from the stack (5) only after the stack (5) has been completely inserted into the mold (6).

4. The method according to any of the preceding claims,
wherein the stack (5) comprises a plurality of recesses on the underside (12) along the longitudinal axis (13) which correspond to the fixing devices (17, 17').

5. The method according to any of the preceding claims,
wherein the stack (5), during insertion into the mold (6), is set against a stop (19) for positioning with a longitudinal end relative to the longitudinal axis (13).

6. The method according to any of the preceding claims,
wherein the stack (5) is set against at least one lateral stop (19) in the transverse direction relative to the longitudinal axis (13) during insertion into the mold (6).

7. The method according to any of the preceding claims,
wherein an inner surface of one leg (14), of both legs (14) and/or of the cover plate (15) facing the stack (5) has a shaping corresponding to the predefined alignment of the planks (7) of the stack (5).

8. The method according to any of the preceding claims,
wherein each holding clamp (4) comprises fastening means (16) on the legs (14) and, in the step of attaching the fixing devices (17, 17'), each fixing device (17) being connected to the fastening means (16) of a corresponding holding clamp (4).

9. The method according to any of the preceding claims, wherein the fixing devices (17) are designed as lifting straps or ratchet straps.

10. The method according to any of claims 1 to 8,
wherein the fixing devices (17') are designed as bracket.

11. A system (1) for producing a rotor blade spar cap of a rotor blade of a wind turbine in a mold (6), comprising
- a mold (6) for inserting a stack (5) made up of prefabricated planks (7) of a fiber composite material which are aligned relative to one another in a predefined manner, the stack (5) having a longitudinal axis (13) as well as an underside (12), a top side (11) and mutually opposite lateral sides (10),
- a lifting crossbar (2) and a plurality of holding clamps (4) which are intended for holding the stack (5) and can be connected to the lifting crossbar (2), the holding clamps (4) being of U-shaped design and each having two legs (14) and a cover plate (15) connecting the two legs (14) for positively surrounding the stack (5) from the top side (11) and the two lateral sides (10), and
- fixing devices (17) arranged on each holding clamp (4), so that the stack (5) can be held in the holding clamp (4) at least from the underside (12) and, together with the holding clamp (4), the predefined alignment of the planks (7) can be maintained,
wherein
- the fixing devices (17) are designed as lifting straps or ratchet straps, and
- the system (1) is designed to perform a method according to any of the preceding claims.

## Revendications

1. Procédé de fabrication d'un longeron de pale de rotor pour une pale de rotor d'une éolienne dans un moule (6), présentant les étapes :
- mise à disposition d'un empilement (5) de planches (7) orientées de manière spécifiée les unes par rapport aux autres, en matériau composite en fibres, sachant que l'empilement (5) présente un axe longitudinal (13) ainsi qu'un côté inférieur (12), un côté supérieur (11) et des côtés latéraux (10) opposés l'un à l'autre,
- mise à disposition d'un palonnier de levage (2) auquel plusieurs agrafes de maintien (4) destinées à maintenir l'empilement (5) peuvent être reliées, sachant que les agrafes de maintien (4) sont constituées sensiblement en forme de U et présentent respectivement deux branches (14) et une plaque de recouvrement (15) reliant les deux branches (14),
- placement des agrafes de maintien (4) au niveau de l'empilement (5) le long de l'axe longitudinal (13) de façon distribuée de telle manière que l'empilement (5) soit entouré par complémentarité de forme par le côté supérieur (11) et les deux côtés latéraux (10) et l'orientation spécifiée des planches (7) soit conservée,
- placement d'un dispositif d'arrêt (17, 17') au niveau de chaque agrafe de maintien (4) de telle manière que l'empilement (5) soit maintenu au moins par le côté inférieur (12) dans l'agrafe de maintien (4) et l'orientation spécifiée des planches (7) soit conservée conjointement avec l'agrafe de maintien (4), et
- transport de l'empilement (5) vers le moule (6) et insertion de l'empilement (5) dans le moule (6) moyennant le palonnier de levage (2), sachant que les dispositifs d'arrêt (17, 17') et les agrafes de maintien (4) sont enlevées de l'empilement (5) de telle manière que l'empilement (5) soit positionné de manière spécifiée avec l'orientation spécifiée des planches (7) dans le moule (6).

2. Procédé selon la revendication 1,
sachant que l'empilement (5) est inséré dans le moule (6) en commençant par une extrémité (18) côté longitudinal par rapport à l'axe longitudinal (13) et sachant que les dispositifs d'arrêt (17, 17') et les agrafes de maintien (4) sont enlevées de manière séquentielle en partant de l'extrémité (18) côté longitudinal pendant l'insertion de l'empilement (5).

3. Procédé selon la revendication 1 ou 2,
sachant que les dispositifs d'arrêt (17) et/ou les agrafes de maintien (4) sont seulement enlevées de l'empilement (5) après une insertion complète de l'empilement (5) dans le moule (6).

4. Procédé selon l'une des revendications précédentes,
sachant que l'empilement (5) présente plusieurs évidements correspondant aux dispositifs d'arrêt (17, 17') au niveau du côté inférieur (12) le long de l'axe longitudinal (13) .

5. Procédé selon l'une des revendications précédentes,
sachant que l'empilement (5), lors de l'insertion dans le moule (6), est placé pour le positionnement contre une butée (19) avec une extrémité côté longitudinal par rapport à l'axe longitudinal (13).

6. Procédé selon l'une des revendications précédentes,
sachant que l'empilement (5), lors de l'insertion dans le moule (6) en direction transversale à l'axe longitudinal (13), est placé au moins contre une butée (19) latérale.

7. Procédé selon l'une des revendications précédentes,
sachant qu'une face intérieure tournée vers l'empilement (5) d'une branche (14), des deux branches (14) et/ou de la plaque de recouvrement (15) présente une forme correspondant à l'orientation spécifiée des planches (7) de l'empilement (5) .

8. Procédé selon l'une des revendications précédentes,
sachant que chaque agrafe de maintien (4) présente des moyens de fixation (16) au niveau des branches (14), sachant que, à l'étape de placement des dispositifs d'arrêt (17, 17'), chaque dispositif d'arrêt (17) est relié aux moyens de fixation (16) d'une agrafe de maintien (4) correspondante.

9. Procédé selon l'une des revendications précédentes,
sachant que les dispositifs d'arrêt (17) sont constitués comme sangles de levage ou sangles à cliquet.

10. Procédé selon l'une des revendications 1 à 8, sachant que les dispositifs d'arrêt (17') sont constitués comme étriers.

11. Système (1) de fabrication d'un longeron de pale de rotor d'une pale de rotor d'une éolienne dans un moule (6), présentant
- un moule (6) destiné à insérer un empilement (5) de planches (7) préfabriquées, orientées de manière spécifiée les unes par rapport aux autres, en matériau composite en fibres, sachant que l'empilement (5) présente un axe longitudinal (13) ainsi qu'un côté inférieur (12), un côté supérieur (11) et des côtés latéraux (10) opposés l'un à l'autre,
- un palonnier de levage (2) et plusieurs agrafes de maintien (4) destinées à maintenir l'empilement (5), pouvant être reliées au palonnier de levage (2), sachant que les agrafes de maintien (4) sont constituées en forme de U et présentent respectivement deux branches (14) et une plaque de recouvrement (15) reliant les deux branches (14), destinée à entourer par complémentarité de forme l'empilement (5) par le côté supérieur (11) et les deux côtés latéraux (10), et
- des dispositifs d'arrêt (17) disposés au niveau de chaque agrafe de maintien (4) de telle sorte que l'empilement (5) puisse être maintenu au moins par le côté inférieur (12) dans l'agrafe de maintien (4) et l'orientation spécifiée des planches (7) puisse être conservée conjointement avec l'agrafe de maintien (4), sachant que
- les dispositifs d'arrêt (17) sont constitués comme sangles de levage ou sangles à cliquet, et
- le système (1) est constitué pour exécuter un procédé selon l'une des revendications précédentes.
